# EUROPÄISCHE PATENTSCHRIFT

(11) **EP 4 345 027 B1**
(45) Veröffentlichungstag und Bekanntmachung des Hinweises auf die Patenterteilung: **09.12.2026**
(21) Anmeldenummer: 22198719.1
(22) Anmeldetag: 29.09.2022
(51) Int. Cl.: B65D 83/48, A23P 30/40, A47J 43/12, B05B 1/30, B05B 7/00, B05B 9/08, B05B 12/00

(54) **ENTNAHME- UND DOSIERVENTIL FÜR EINE VORRICHTUNG ZUM AUSTRAGEN VON SPRÜHMEDIEN**
METERING AND DISPENSING VALVE FOR A DEVICE FOR DISPENSING SPRAY MEDIA
SOUPAPE DE PRÉLÈVEMENT ET DE DOSAGE POUR UN DISPOSITIF DE DISTRIBUTION DE PRODUITS PULVÉRISÉS

(43) Veröffentlichungstag der Anmeldung: 03.04.2024
(73) Patentinhaber: iSi GmbH, 1210 Wien (AT)
(72) Erfinder: MASZCZYK, Wojciech, 2114 Kleinebersdorf (AT); MANOJLOVIC, Daniel, 1220 Wien (AT)
(74) Vertreter: Müller, Wolfram Hubertus

(56) Entgegenhaltungen:
- DE-U1- 20 113 299
- DE-U1- 8 804 901
- US-A- 2 788 925
- US-B1- 9 387 977

## Beschreibung

### GEBIET DER ERFINDUNG

Die vorliegende Erfindung betrifft ein Entnahme- und Dosierventil gemäß dem Oberbegriff des Patentanspruchs 1, einen Kopf für eine Vorrichtung zum Austragen von Sprühmedien mit dem erfindungsgemäßen Entnahme- und Dosierventil gemäß dem Oberbegriff des Patentanspruchs 14 sowie eine Vorrichtung zum Austragen von Sprühmedien gemäß dem Oberbegriff des Patentanspruchs 15.

### STAND DER TECHNIK

Die AT 502 472 B1 offenbart eine Vorrichtung zur Erzeugung und Entnahme von flüssigen oder schaumförmigen Lebensmitteln, umfassend einen Druckbehälter, einen an dem Druckbehälter anordenbaren Kopf, welcher als Deckel fungiert, mit einer Aufnahme für Gaskapseln. Dabei wird der Behälter zu Beginn mit dem jeweiligen zu versprühenden Lebensmittel befüllt und im Anschluss mit dem Kopf verschlossen. Das Lebensmittel bzw. das zu versprühende Medium liegt dabei in flüssiger Form in dem Behälter vor. Durch Einbringung eines Gases aus einer Gaskapsel in den Geräte- bzw. Behälterinnenraum steigt der Druck im Behälterinnenraum derart, dass die Gasteilchen im Lebensmittel gelöst werden, wobei dieser Prozess durch Schütteln der Vorrichtung beschleunigbar ist. Dabei kommt es bei Entnahme des Lebensmittels zu einem Aufschäumen bzw. zu einem Überführen des Lebensmittels in einen cremeförmigen bzw. schaum- oder saucenförmigen Zustand. Die Entnahme durch eine Ventilbohrung erfolgt mit Hilfe eines Druckknopfs, welcher mit einem Ventilstößel zur Dosierung des auszubringenden aufgeschäumten Lebensmittels verbunden ist, wobei zum Verschließen der Ventilbohrung eine Anordnung aus Dichtfläche und Dichtelement vorgesehen ist.

Die DE 88 04 901 U1 offenbart einen Sahnesiphon mit einem Abgabeventil, welches in einem Loch einer Verschlusskappe verschiebbar gelagert ist, wobei an dem Abgabeventil ein Kolben mit einem von einem Kolbenbetätigungsbereich axial gegenüberliegend angeordneten Verschlusskopf als Kolbenendbereich angeordnet ist. Dabei ist der Kolben in einem ringförmigen Durchlass linear beweglich angeordnet, wobei das Abgabeventil einen geschlossenen Zustand aufweist, wenn ein angrenzend zum Verschlusskopf angeordnetes Dichtelement in Form eines Dichtrings die Ventilöffnung verschließt.

Die DE 201 13 299 U1 offenbart einen Mischkopf für einen Sicherheitssiphon zur sicheren Entnahme sauerstoffhaltigen Gases aus Druckgaskapseln, wobei ein Stößel linear beweglich innerhalb einer Öffnung angeordnet ist.

Die US 9,387,977 B1 offenbart eine Vorrichtung zur Abgabe von Treibmitteln (Aerosolen), wobei ein Kolben zur Ausgabe der Treibmittel bei Betätigung der Vorrichtung dient. Hierzu steht im geschlossenen Zustand der Vorrichtung ein austragsseitig an dem Kolben in einer Hinterschneidung angeordneter Dichtring mit einer austragsseitig angeordneten Dichtfläche in Kontakt, wodurch eine Dichtheit der Vorrichtung gewährleistet ist.

Die US 2,788,925 A offenbart ein Dosierventil, wobei ein an einem Kolben angeordneter Kugelkopf, welcher einen Dichtring umfasst, innerhalb eines röhrenförmigen, zylindrischen Behälterhohlraums derart angeordnet ist, dass innerhalb einer austragsseitigen Querschnittsverengung des Behälterhohlraums der Dichtring im geschlossenen Zustand des Dosierventils an der Querschnittsverengung anliegt.

Dabei ergibt sich generell das Problem, dass eine einfache Handhabung bei konstanter Abgabe des zu versprühenden Mediums, insbesondere bei nicht konstanten Druckverhältnissen innerhalb der Vorrichtung, nur mit sehr viel Übung realisierbar ist. Auch ist eine einfache Reinigung eines zur Ausgabe des zu versprühenden Mediums erforderlichen Entnahme- und Dosierventils nicht gegeben, da die Dichtung des Entnahmeventils fest im Kopf eingebaut ist.

### AUFGABE DER ERFINDUNG

Es ist daher eine Aufgabe der Erfindung obige beschriebene Probleme zu überwinden, indem das Entnahme- und Dosierventil zur Reinigung entnehmbar ausgebildet ist, wobei eine optimale Dosierbarkeit zu gewährleisten ist. Hierbei ist eine Entlüftung des Druckbehälters während der Trennung des Kopfs vom Druckbehälter zu gewährleisten, während bei einer Trennung des Entnahme- und Dosierventils vom Kopf ein etwaiges unkontrolliertes entweichen des Mediums aus dem Druckbehälter zu unterbinden ist.

### DARSTELLUNG DER ERFINDUNG

Um die genannte Aufgabe zu lösen ist ein Entnahme- und Dosierventil gemäß Anspruch 1 vorgesehen. Dabei umfasst das Entnahme- und Dosierventil für eine Vorrichtung zum Austragen von Sprühmedien einen Entnahmekolben mit einer Längsachse, welcher einen Entnahmekolbenbetätigungsbereich sowie einen axial gegenüberliegend angeordneten Entnahmekolbenendbereich aufweist, und eine Entnahmemündung, welche eine Durchlassöffnung aufweist, in welcher der Entnahmekolben linear beweglich angeordnet ist, wobei das Entnahme- und Dosierventil einen geschlossenen Zustand aufweist, der mit einer definierten Position des Entnahmekolbens korrespondiert. Erfindungsgemäß ist angrenzend zum Entnahmekolbenendbereich betätigungsbereichsseitig ein erstes Dichtelement, welches vorzugsweise in Form eines O-Rings ausgebildet ist, angeordnet, welches im geschlossenen Zustand des Entnahme- und Dosierventils die Durchlassöffnung verschließt, wobei die Durchlassöffnung radial außen durch eine betätigungselementseitige Dichtfläche und eine sich axial daran anschließende austragsseitige Entnahmefläche begrenzt ist, die zusammen eine Innenfläche der Entnahmemündung bilden, wobei das erste Dichtelement im geschlossenen Zustand des Entnahme- und Dosierventils zumindest teilweise an der Dichtfläche anliegt , wobei die betätigungselementseitig angeordnete Dichtfläche eine geringere Querschnittsfläche als die austragsseitig angeordnete Entnahmefläche aufweist, wobei die Entnahmefläche der Entnahmemündung zumindest eine Ausnehmung zur Durchflussregelung des Sprühmediums umfasst. Hierbei bietet sich durch die Längsverschiebbarkeit des Entnahmekolbens der Vorteil, dass dieser aus der Vorrichtung entnehmbar ist, wodurch der Entnahmekolben sowie das Entnahme- und Dosierventil leicht zu reinigen sind.

Dabei ist im geschlossenen Zustand des mittels eines am Entnahmekolbenbetätigungsbereich angeordneten Betätigungselements regelbaren Entnahme- und Dosierventils zumindest ein Teil des Entnahmekolbenendbereichs innerhalb der Durchlassöffnung angeordnet, wodurch eine einfache Herstellbarkeit sowie ein einfacher Aufbau des Ventils realisierbar sind. Auch ist dadurch gewährleistet, dass bei einem etwaigen Versagen des Entnahme- und Dosierventils das Sprühmedium langsam und nicht schlagartig austritt.

Es wird darauf hingewiesen, dass das Entnahme- und Dosierventil selbstredend neben dem geschlossenen Zustand auch einen geöffneten Zustand aufweist, der ebenfalls mit einer entsprechenden Längsposition des Entnahmekolben korrespondiert, wobei vorgesehen sein kann, dass eine Vielzahl von geöffneten Zuständen existieren, die mit unterschiedlichen Längspositionen des Entnahmekolbens korrespondieren und in denen jeweils in unterschiedlichem Maße Sprühmedium das Entnahme- und Dosierventil passieren kann. Weiter ist vorgesehen, dass das Entnahme- und Dosierventil des Weiteren eine Entlüftungsstellung aufweist, in der der Entnahmekolben zur Reinigung des Entnahme- und Dosierventils frei entnehmbar ist.

Im Detail ist die Durchlassöffnung radial außen durch eine betätigungselementseitige Dichtfläche und eine sich axial daran anschließende austragsseitige Entnahmefläche begrenzt, die zusammen eine Innenfläche der Entnahmemündung bilden, wobei das erste Dichtelement im geschlossenen Zustand des Entnahme- und Dosierventils zumindest teilweise an der Dichtfläche anliegt, wodurch eine Dichtheit des Entnahme- und Dosierventils sowie eine längere Haltbarkeit des auszutragenden Sprühmediums auch bei Nichtbenutzung der Vorrichtung gewährleistet ist.

Dabei ist vorgesehen, dass die betätigungselementseitig angeordnete Dichtfläche eine geringere Querschnittsfläche als die austragsseitig angeordnete Entnahmefläche aufweist. Durch eine derart konische bzw. kegelförmige Ausgestaltung der Innenfläche ist eine Dichtheit des auf einem Entnahmekolben basierenden Ventils gewährleistet, wobei in Abhängigkeit der Position des Entnahmekolbens bzw. der Stellung des Betätigungselements auch das Ausströmverhalten bzw. die Durchflussgeschwindigkeit des Sprühmediums regelbar sowie eine vereinfachte Reinigung realisierbar ist.

Hierbei weisen in einer Ausführungsform sowohl die Dichtfläche und die Entnahmefläche der Entnahmemündung als auch der Entnahmekolben die gleiche Querschnittsform, welche vorzugsweise rotationssymmetrisch ausgebildet ist, auf, wodurch eine einfachere Herstellbarkeit gewährleistet ist. Alternativ können unterschiedliche Querschnittsformen realisiert sein.

Im Detail ist die Entnahmefläche vorzugsweise konisch oder konisch bombiert oder konisch-konvex zur Regelung eines Durchflusses des Sprühmediums zwischen Durchlassöffnung und Entnahmekolben ausgebildet, wodurch sich der Vorteil ergibt, dass der Anwender der Vorrichtung bei deren Handhabung durch eine Kraft- bzw. Druckausübung auf das Betätigungselement den Durchfluss des Sprühmediums steuern kann. Darüber hinaus ergibt sich der Vorteil, dass eine einfache Abdichtung des Entnahme- und Dosierventils mittels des am Entnahmekolben angeordneten ersten Dichtelements realisierbar ist.

Hierbei ist zur einfacheren Montage des ersten Dichtelements der Entnahmekolbenendbereich vorzugsweise konusförmig ausgebildet, wodurch das vorzugsweise als O-Ring ausgebildete erste Dichtelement über den stabförmigen Entnahmekolben auf- bzw. übergerollt werden kann, wobei zur Fixierung des ersten Dichtelements dieses in einer an dem Entnahmekolbenendbereich angrenzenden Entnahmekolbennut, welche vorzugsweise in Form einer Trapeznut ausgebildet ist, angeordnet ist. Dabei ist vorgesehen, dass der Außendurchmesser des ersten Dichtelements größer als der kleinste Durchmesser der Dichtfläche der Entnahmemündung ist, wodurch eine Abdichtung des Entnahme- und Dosierventils gewährleistet ist. Dabei ist das erste Dichtelement aus Elastomer, vorzugsweise aus Vulkanisaten von Synthesekautschuk, ausgebildet, um eine möglichst hohe bzw. ausreichend gute Abdichtung zu erzielen.

Zur Entnahme von hochviskosen Medien sowie zur genaueren Durchflussregelung des Sprühmediums umfasst die Entnahmefläche der Entnahmemündung zumindest eine Ausnehmung, vorzugsweise drei um 120 Grad versetzte Ausnehmungen, wodurch ein gezielter Austrag eines Sprühmediums mit einer höheren Viskosität oder eines Sprühmediums, welches mit festen Partikeln oder Feststoffen versetzt ist, realisierbar ist. Hierbei ist / sind die Ausnehmung(en) in einer Ausführungsform flach oder schlitzförmig oder zylinderförmig ausgebildet, wobei der Entnahmekolben stab-, zylinder- oder spindelförmig ausgebildet ist. Durch derart unterschiedlich ausgebildete Ausnehmungen ist eine Steuerung der Durchflussmenge des Sprühmediums durch das Entnahme- und Dosierventil während der Bedienung der Vorrichtung realisierbar.

In einer Ausführungsform umfasst der Entnahmekolben einen entnahmekolbenbetätigungsbereichsseitig angeordneten Führungsabschnitt, wobei zwischen dem Entnahmekolbenendbereich und dem Führungsabschnitt entnahmekolbenendbereichsseitig ein Dosierungsabschnitt und führungsabschnittsseitig ein Flussbremsabschnitt angeordnet sind, wodurch auch bei maximaler Betätigung des Betätigungselements keine höhere bzw. eine reduzierte Durchflussmenge als die über einen Durchmesser des Entnahmekolbens vordefinierte maximale Durchflussmenge realisierbar ist. Dies verhindert ein schlagartiges Ausströmen des Sprühmediums bei übermäßiger, insbesondere zu starker, Betätigung der Vorrichtung bzw. eine unnötig große Durchflussmenge bei voller Öffnung des Entnahme- und Dosierventiles, insbesondere bei einem hohen Druck.

Dabei ist zur Gewährleistung eines zielgerichteten Austrags des Sprühmediums der Dosierungsabschnitt in einer Ausgestaltung konisch oder gekrümmt verjüngt zum Führungsabschnitt ausgebildet, wobei der Führungsabschnitt zylinder- oder stabförmig ausgebildet ist, wodurch ein zielgerichteter Austrag des Sprühmediums mit einer bestimmten Durchflussmenge in Abhängigkeit einer Lage bzw. Positionierung des Entnahmekolbens im Entnahme- und Dosierventil realisierbar ist. Mit anderen Worten sind in Abhängig der Positionierung des Entnahmekolbens verschiedene Durchflussmengen einstellbar, wobei mittels verschiedenartig ausgebildeter Geometrien des Entnahmekolbens und der Durchlassöffnung (konisch - zylindrisch, konisch - gekrümmt, gekrümmt - gekrümmt usw.) bei gleicher Positionierung des Entnahmekolbens ebenso verschiedene Volumenströme bzw. Austräge des Sprühmediums realisierbar sind.

Hierbei weist der Führungsabschnitt eine gleiche oder größere Querschnittsfläche als der Flussbremsabschnitt auf, wobei der konisch oder gekrümmt ausgebildete Dosierungsabschnitt zumindest entnahmekolbenendbereichsseitig - bei voll geöffneten Ventil - eine gleiche oder kleinere Querschnittsfläche (Flussquerschnittsfläche) als der Flussbremsabschnitt aufweist, wodurch ein vereinfachter Aufbau als auch eine vereinfachte Herstellbarkeit realisierbar sind.

Zur sicheren Montage des Entnahme- und Dosierventils an einem Kopf der Vorrichtung zum Austragen des Sprühmediums umfasst die Entnahmemündung einen Gewindeabschnitt, wodurch ein einfaches Einschrauben des Entnahme- und Dosierventils in ein korrespondierendes Gewinde im Kopf der Vorrichtung realisierbar ist.

Zur Gewährleistung einer hohen Lebensdauer sowie zur einfacheren Reinigung sind der Entnahmekolben sowie die Entnahmemündung aus Kunststoff oder Metall, vorzugsweise Edelstahl, ausgebildet.

Das Verfahren zur Handhabung eines erfindungsgemäßen Entnahme- und Dosierventils umfasst nachfolgende Ventilstellungen:
- Schließstellung, in welcher ein Entnahmekolben derart in einer Durchlassöffnung einer Entnahmemündung angeordnet ist, dass ein erstes an dem Entnahmekolben angeordnetes Dichtelement an einer Dichtfläche der Durchlassöffnung anliegt;
- Öffnungsstellung, in welcher der Entnahmekolben derart in der Durchlassöffnung der Entnahmemündung angeordnet ist, dass ein Durchfluss eines Sprühmediums zwischen einer Entnahmefläche der Entnahmemündung und dem Entnahmekolben gewährleistet ist. Dabei umfasst die Öffnungsstellung eine Dosierstellung und eine Drosselstellung wie folgt:
- Dosierstellung bzw. Dosierbereich, in welcher / welchem der Entnahmekolben derart in der Durchlassöffnung der Entnahmemündung angeordnet ist, dass ein Dosierungsabschnitt des Entnahmekolbens im Bereich der Entnahmefläche der Entnahmemündung angeordnet ist;
- Drosselstellung, in welcher ein Flussbremsabschnitt des Entnahmekolbens in der Durchlassöffnung der Entnahmemündung derart angeordnet ist, dass ein reduzierter Durchfluss des Sprühmediums zwischen Entnahmefläche und Entnahmekolben gewährleistet ist.

In einem weiteren Erfindungsaspekt betrifft die vorliegende Erfindung einen Kopf für eine Vorrichtung zum Austragen von Sprühmedien mit einem erfindungsgemäßen Entnahme- und Dosierventil. Der Kopf umfasst:
- einen Kopfkörper,
- ein Betätigungselement, welches zur Handhabung des Entnahme- und Dosierventils ausgebildet ist,
- einen Niederhalter, in dem ein Entnahmekolben des Entnahme- und Dosierventils linear beweglich angeordnet ist, wobei der Entnahmekolben einen Entnahmekolbenanschlag umfasst, welcher eine Schließstellung des Entnahme- und Dosierventils begrenzt, wobei in dem Niederhalter ein den Entnahmekolben umgebendes Federelement, vorzugsweise in Form einer Druckfeder oder eines Gummipuffers, zwischen dem Entnahmekolbenanschlag und einem Federanschlag des Niederhalters zur Fixierung der Schließstellung im unbetätigten Zustand des Entnahme- und Dosierventils angeordnet ist;
- eine Begasungseinheit, durch welche eine Gasbefüllung aus einer Gaskapsel des Kopfes bzw. der Vorrichtung gewährleistet ist sowie
- einen Tüllenstutzen zum Austragen des mit einem Gas aufgeschäumten Sprühmediums,
- wobei eine Entnahmemündung des Entnahme- und Dosierventils einstückig mit dem Kopfkörper oder mittels eines betätigungselementseitig angeordneten Gewindeabschnitts der Entnahmemündung mit dem Kopfkörper verschraubbar ausgebildet ist.

Dabei ist in einer Ausführungsform der Kopfkörper zumindest abschnittsweise von einem Kopfmantel umgeben, welcher Kopfmantel vorzugsweise thermisch isolierend und/oder mit Anti-Rutschelementen zur Gewährleistung eines besseren Griffverhaltens ausgebildet ist. Ein derart ausgebildeter Kopfmantel kann insbesondere beim Hantieren mit flüssigen Lebensmitteln sinnvoll sein, um ein etwaiges Entgleiten aus der Hand zu vermeiden.

Dabei ist in einer Ausführungsform das Betätigungselement als Hebel ausgebildet, wobei der Hebel um einen im Bereich einer Halterung angeordneten Achsenstift drehbar gelagert ist, wobei der Hebel auf einem am kopfseitigen Ende des Entnahmekolbens angeordneten Gleitelement, welches gegenüber einem Entnahmekolbenendbereich angeordnet ist, derart aufliegt, dass bei einer Betätigung des Hebels dieser auf dem Gleitelement gleitet, sodass der mittels drittes und viertes Dichtelement annähernd normal zum Hebel geführte Entnahmekolben in Hebelbetätigungsrichtung bewegt wird. Durch ein derart hebelartig ausgebildetes Betätigungselement ist es für den Anwender der Vorrichtung möglich einen nahezu gleichmäßigen Austrag des Sprühmediums als auch eine zielgerichtete Steuerung des Austragsmediums zu erzielen.

In einem weiteren Erfindungsaspekt betrifft die vorliegende Erfindung eine Vorrichtung zum Austragen von Sprühmedien mit einem Kopf, welcher ein erfindungsgemäßes Entnahme- und Dosierventil aufweist. Die Vorrichtung umfasst nachfolgende Bestandteile:
- einen Behälter, an welchem ein Kopfkörper des Kopfes im bestimmungsgemäßen Gebrauch angeordnet ist, wobei zwischen dem Kopfkörper und dem Behälter eine Rückschlagdichtung anordenbar ist;
- eine Begasungseinheit, durch welche ein Gasfluss aus einer Gaskapsel, welche in einem Gaskapselhalter anordenbar ist, in den Kopf bzw. die Vorrichtung gewährleistet ist;
- ein rohrförmig ausgebildetes Steigrohr, welches im Innenraum des Behälters vorgesehen ist und an einer Steigrohrhalterung des Kopfkörpers mittels einer Steigrohrbefestigung anordenbar ist,
- wobei das Steigrohr über die Steigrohrhalterung des Kopfkörpers an das Entnahme- und Dosierventil gekoppelt ist.

Durch den Einsatz einer Rückschlagdichtung tritt bei einem etwaigen Versagen des Entnahme- und Dosierventils das Sprühmedium nicht schlagartig bzw. unkontrolliert aus. Das Steigrohr dient zur Förderung des Sprühmediums.

Dabei liegen in einer Ausführungsform sowohl das Steigrohr als auch die Durchlassöffnung der Entnahmemündung des Entnahme- und Dosierventils auf einer gleichen Achse, wodurch etwaige Strömungsverluste bzw. Strömungswiderstände vermeidbar sind.

### KURZE BESCHREIBUNG DER FIGUREN

Die Erfindung wird nun anhand von Ausführungsbeispielen näher erläutert. Die Figuren sind beispielhaft und sollen den Erfindungsgedanken zwar darlegen, ihn aber keinesfalls einengen oder gar abschließend wiedergeben. Auch sind aus den Figuren weitere vorteilhafte Ausgestaltungen, Einzelheiten und Weiterbildungen der Erfindung zu entnehmen. Dabei zeigt:
- Fig. 1: eine Schnittdarstellung eines Kopfes mit einem erfindungsgemäßen Entnahme- und Dosierventil in Schließposition;
- Fig. 2: eine vergrößerte Detaildarstellung A des Entnahme- und Dosierventils aus Fig. 1;
- Fig. 3: eine Schnittdarstellung des Kopfes mit dem erfindungsgemäßen Entnahme- und Dosierventil in Dosierstellung;
- Fig. 4: eine vergrößerte Detaildarstellung B des Entnahme- und Dosierventils aus Fig. 3;
- Fig. 5: eine Schnittdarstellung des Kopfes mit dem erfindungsgemäßen Entnahme- und Dosierventil in Drosselstellung;
- Fig. 6: eine vergrößerte Detaildarstellung C des Entnahme- und Dosierventils aus Fig. 5;
- Fig. 7: eine Schnittdarstellung des Kopfes mit dem erfindungsgemäßen Entnahme- und Dosierventil in Entlüftungsstellung;
- Fig. 8: eine vergrößerte Detaildarstellung D des Entnahme- und Dosierventils aus Fig. 7;
- Fig. 9: eine Schnittdarstellung einer ersten Ausführungsform einer nicht erfindungsgemäßen Entnahmemündung;
- Fig. 10: eine Schnittdarstellung einer zweiten Ausführungsform einer nicht erfindungsgemäßen Entnahmemündung;
- Fig. 11: eine Schnittdarstellung einer dritten Ausführungsform einer nicht erfindungsgemäßen Entnahmemündung;
- Fig. 12: eine Schnittdarstellung einer vierten Ausführungsform der erfindungsgemäßen Entnahmemündung;
- Fig. 13: eine perspektivische Darstellung der vierten Ausführungsform der erfindungsgemäßen Entnahmemündung aus Fig. 12;
- Fig. 14: eine Schnittdarstellung einer fünften Ausführungsform der erfindungsgemäßen Entnahmemündung;
- Fig. 15: eine perspektivische Darstellung der fünften Ausführungsform der erfindungsgemäßen Entnahmemündung aus Fig. 14;
- Fig. 16: eine Seitenansicht einer ersten Ausführungsform eines erfindungsgemäßen Entnahmekolbens;
- Fig. 17: eine Seitenansicht einer zweiten Ausführungsform des erfindungsgemäßen Entnahmekolbens;
- Fig. 18: eine Schnittdarstellung einer Vorrichtung zum Austragen von Sprühmedien mit dem erfindungsgemäßen Entnahme- und Dosierventil;
- Fig. 19: eine Schnittdarstellung einer Betätigungseinheit für die Vorrichtung zum Austragen von Sprühmedien;
- Fig. 20: eine Schnittdarstellung der Vorrichtung (ohne Betätigungseinheit zum Austragen von Sprühmedien mit dem erfindungsgemäßen Entnahme- und Dosierventil;

### WEGE ZUR AUSFÜHRUNG DER ERFINDUNG

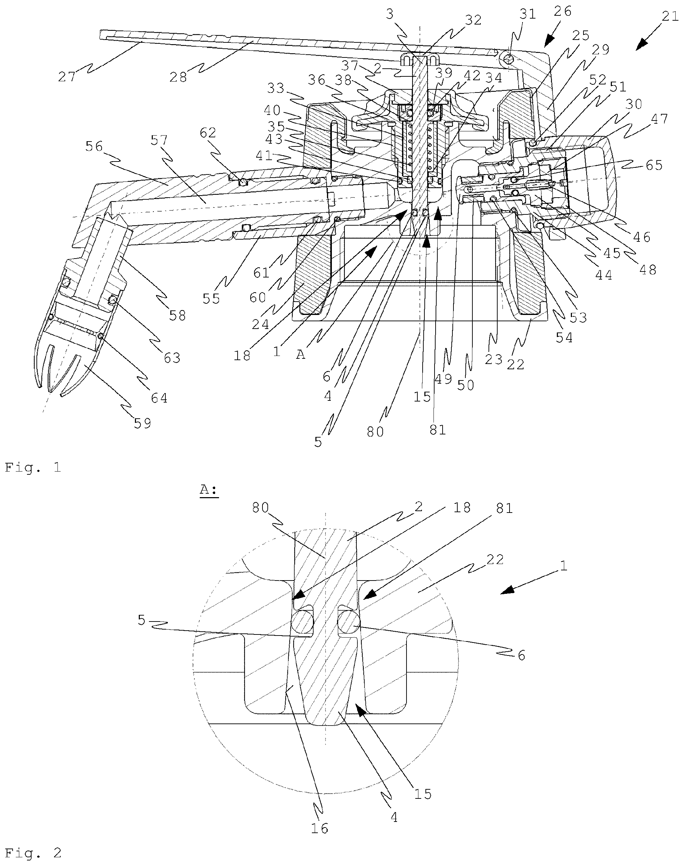

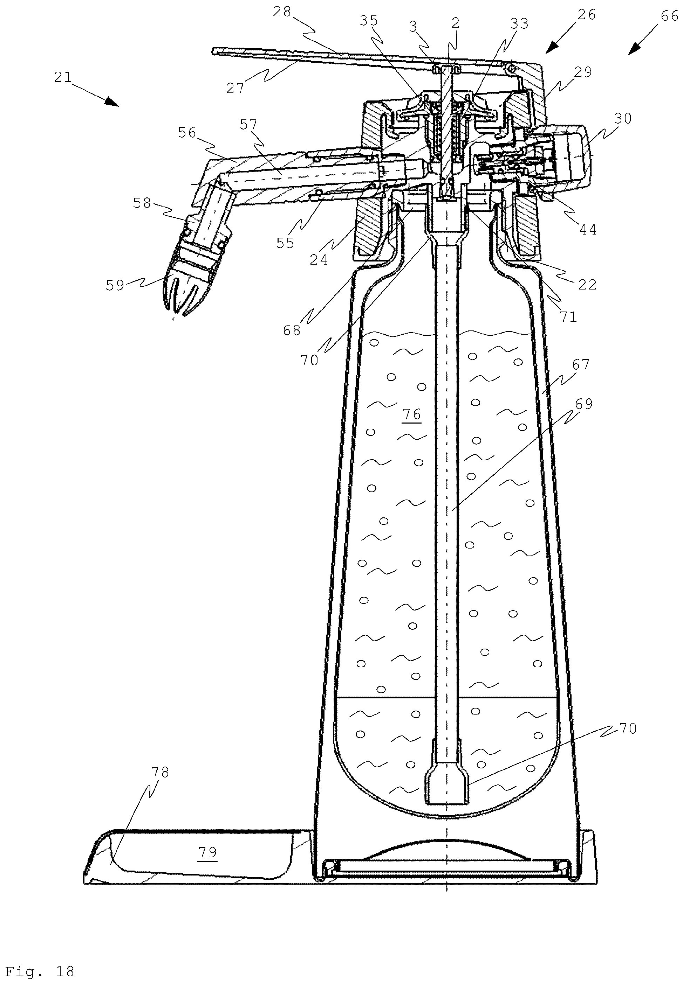

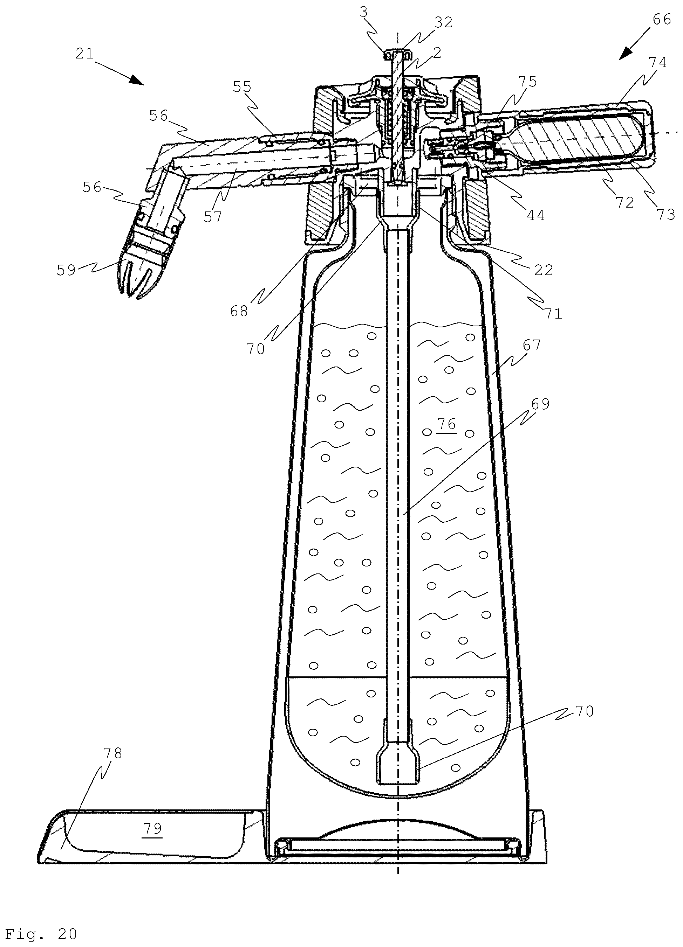

Fig. 1 zeigt eine Schnittdarstellung eines Kopfes 21 mit einem erfindungsgemäßen Entnahme- und Dosierventil 1 in Schließposition für eine Vorrichtung 66 (siehe Fig. 18 und Fig. 20) zum Austragen von Fluiden, wobei es sich vorzugsweise um Schlagsahne o.dgl. handelt, wobei der Kopf 21 mittels einer ersten Gewindeverbindung 23 auf einem Behälter 67 der Vorrichtung 66 aufschraubbar ist. Dabei dienen als Hauptelemente des Kopfes 21 ein Kopfkörper 22, ein Tüllenstutzen 55, eine Betätigungseinheit 26, eine Begasungseinheit 44 sowie das Entnahme- und Dosierventil 1, wobei das Entnahme- und Dosierventil 1 mittels eines Betätigungselements 27, welches vorzugsweise als Hebel, vorzugsweise mit einer Betätigungselementabdeckung 28 zur Gewährleistung eines besseren Griffverhaltens, ausgebildet ist, zu bedienen ist. Ein Kopfmantel 24, welcher vorzugsweise weite Teile des Kopfes 21 umgibt bzw. umhüllt, dient zum einen zur Gewährleistung eines besseren Griffverhaltens bzw. zur Erleichterung der Handhabbarkeit des Kopfes 21 und zum anderen als Thermoisolierung, in Form eines Hitze- als auch Kälteschutzes.

Im Detail basiert das Entnahme- und Dosierventil 1 auf einem Schieberprinzip, d.h. dass ein Entnahmekolben 2 innerhalb eines Niederhalters 33 des Kopfes 21 längsverschiebbar angeordnet ist, wobei ein Federelement 35 zwischen einem Federanschlag 34 des Niederhalters 33 und einem Entnahmekolbenanschlag 38 innerhalb des Niederhalters 33 derart angeordnet ist, dass das Entnahme- und Dosierventil 1 im unbetätigten Zustand des Betätigungselements 27, sprich in der Ausgangsstellung, mittels eines ersten Dichtelements 6 geschlossen ist.

Der Entnahmekolben 2 umfasst eine Längsachse 80, die eine axiale Richtung des Entnahmekolbens 2 und allgemein des Entnahme- und Dosierventils 1 definiert.

Das Betätigungselement 27 der Betätigungseinheit 26 ist über einen Achsenstift 31 mit einer Halterung 29 drehbar verbunden, wobei ein mittels einer dritten Gewindeverbindung 51 an dem Begasungseinheitskörper 44 verschraubbar angeordnetes Befestigungselement 30 zur Anordnung der Halterung 29 an dem Kopf 21 dient. Dabei dient ein Verbindungselement 52 zur Verbindung des Befestigungselements 30 mit der Halterung 29. Zur Gewährleistung einer sicheren Hebelwirkung sowie zum Schutz des Kopfmantels 24 weist dieser hebelseitig eine Kopfmantelabdeckung 25 auf, an welcher sich die Halterung 29 abstützt.

Zur Ausgabe des Fluids ist an dem Tüllenstutzen 55 vorzugsweise ein Tüllenhalterungsträger 56 mit einem Mediumaustrittskanal 57 über ein achtes und ein neuntes Dichtelement 61, 62 fluiddicht angeordnet, an welchem Mediumaustrittskanal 57 eine Tüllenhalterung 58 mit einer Tülle 59 anordenbar ist. Hierbei ist zwischen der Tüllenhalterung 58 und der Tülle 59 ebenso in einer Ausführungsform ein zehntes Dichtelement 63 angeordnet, wobei es sich zur einfacheren Reinigung um eine zerlegbare Tülle 59 mit einem Deflektor und einem separaten zehnten Dichtelement 64 handelt. Der in dem Kopf 21 vorzugsweise eingeschraubte Tüllenstutzen 55 weist zur Gewährleistung einer fluiddichten Verbindung ebenso ein siebentes Dichtelement 60 auf.

Während dem Drücken des Betätigungselements 27 in Richtung des Kopfes 21 gleitet dieses auf einem Entnahmekolbenbetätigungsbereich 3 bzw. einem Gleitelement 32 des Entnahmekolbens 2, welcher aus dem Kopf 21 herausragt, während der Entnahmekolben 2 axial in Richtung des Kopfes 21 bzw. in den Kopf 21 geschoben wird, wodurch das Federelement 35, welches vorzugsweise als Druckfeder ausgebildet ist, zwischen dem Federanschlag 34 des Niederhalters 33 und dem Entnahmekolbenanschlag 38 zusammengedrückt wird. Je weiter der Entnahmekolben 2 in den Kopf 21 hineingeschoben wird, desto weiter ist das Entnahme- und Dosierventil 1 bzw. eine Durchlassöffnung 15 geöffnet (und das Federelement 35 zusammengedrückt), da das am Entnahmekolben 2 angeordnete erste Dichtelement 6 von einer Dichtfläche 18, welche durch den Kopfkörper 22 ausgebildet ist, weiter entfernt ist.

Die Durchlassöffnung 15 wird radial außen durch die betätigungselementseitige Dichtfläche 18 und eine sich in axialer Richtung daran anschließende austragsseitige Entnahmefläche 16 begrenzt. Radial innen wird die Durchlassöffnung 15 durch den Entnahmekolben 2 begrenzt.

Bei der Durchlassöffnung 15 handelt es sich somit um eine ringförmige Öffnung, deren Querschnittsfläche durch die Differenzfläche aus der vorzugsweise konisch verlaufenden Dichtfläche 18 und der Querschnittsfläche des zylinderförmigen Entnahmekolbens 2 gebildet wird. Es wird darauf hingewiesen, dass die Querschnittsfläche der Durchlassöffnung 15 nicht nur kreis- bzw. ringförmig, sondern alternativ mit einer beliebigen anderen Form ausgebildet sein kann. Zur einfacheren Anordnung des Dichtelements 6 in einer Entnahmekolbennut 5 ist der Entnahmekolbenendbereich 4 vorzugsweise konisch ausgebildet, wobei sich der Entnahmekolbenendbereich 4 in Richtung des Behälters 67 (siehe Fig. 18 und Fig. 20) verjüngt. Dagegen verjüngt sich die Dichtfläche 18 betätigungsbereichsseitig, d. h. in entgegengesetzter Richtung zum Entnahmekolbenendbereich 4.

Die Durchlassöffnung 15 ist Teil des Kopfkörpers 22 und ist in einer in den Kopfkörper 22 integrierten Entnahmemündung 81 ausgebildet.

Die Begasungseinheit 44 umfasst ein Druckbegrenzungsventil mit einem Rückschlagventilkolben 49 und einer Rückschlagventildichtung 50, wobei in einem Aufstechstifthalter 45 ein Aufstechstift 46 zum Aufstechen einer Membran einer Gaskapsel (nicht dargestellt) angeordnet ist, wobei zur Zentrierung der Gaskapsel als auch zur Befestigung einer Prallplatte 47 für die Gaskapsel ein Haltering 48 vorgesehen ist. Dabei weist das Druckbegrenzungsventil ein fünftes und ein sechstes Dichtelement 53, 54 auf, wobei der Aufstechstifthalter 45 ebenso zur gasdichten Verbindung mit dem Druckbegrenzungsventil ein zwölftes Dichtelement 65 umfasst. Hierbei bildet der Rückschlagventilkolben 49 in Kombination mit dem Aufstechstifthalter 45 und dem sechsten Dichtelement 54 sowie dem zwölften Dichtelement 65 ein Druckbegrenzungsventil zur Begrenzung des Drucks im Geräteinnenraum, wobei dieser Druck im Wesentlichen durch das aus der Gaskapsel in den Geräteinnenraum strömende Gas erzeugt wird. Die Gaskapsel wird dabei nur zu Beginn zur Begasung der Vorrichtung 66 mit der Begasungseinheit verschraubt und vor der Benutzung der Vorrichtung 66 wieder von dieser entfernt.

Der Niederhalter 33 ist innerhalb eines Entnahmeeinheitskörpers 36 angeordnet, wobei ein Entnahmeeinheitsmantel 37 zum hebelseitigen Abdichten des Entnahmeeinheitskörpers 36 dient, wobei der Entnahmeeinheitskörper 36 mit dem Kopfkörper 22 mittels einer zweiten Gewindeverbindung 40 verschraubt und einem zweiten Dichtelement 41 zu dem Kopfkörper 22 abgedichtet ist. Hierbei weist der ebenso wie der Niederhalter 33 vorzugsweise rotationssymmetrisch ausgebildete Entnahmeeinheitskörper 36 als auch der Entnahmeeinheitsmantel 37 eine Durchgangsbohrung auf, durch welche der Entnahmekolben 2 längsverschiebbar gelagert ist, wobei um den Entnahmekolben 2 zwischen dem Niederhalter 33 und dem Entnahmeeinheitskörpers 36 ein viertes Dichtelement 43 angeordnet ist. Der Entnahmeeinheitsmantel 37 umgibt den Entnahmeeinheitskörper 36 zur einfacheren Handhabbarkeit sowie zum Schutz vor einer etwaigen Verschmutzung. Eine Entnahmekolbenverschraubung 39 dient zur Fixierung und Führung des Entnahmekolbens 2, zur Vorspannung des Federelements 35 sowie zur Fixierung bzw. Positionierung des Niederalters 33, wobei ein drittes Dichtelement 42 zum Führen des Entnahmekolbens 2 sowie zum Schutz des Niederhalters 33 vor etwaiger Verunreinigung dient.

Es gilt an dieser Stelle anzumerken, dass sämtliche Dichtelemente 6, 41, 42, 43, 53, 54, 60, 61, 62, 63, 64, 65 vorzugsweise als O-Ring ausgebildet sind.

Fig. 2 zeigt eine vergrößerte Detaildarstellung A des Entnahme- und Dosierventils aus Fig. 1. Dabei ist deutlich ersichtlich, dass in einer Ausführungsform das Entnahme- und Dosierventil 1 als Teil des Kopfkörpers 22 ausgebildet ist. Hierbei weist das Entnahme- und Dosierventil 1 eine konische Innenfläche, welche sich aus der kopfseitigen bzw. betätigungselementseitigen Dichtfläche 18 und der behälter- bzw. bodenseitigen bzw. austragsseitigen Entnahmefläche 16 zusammensetzt auf, wobei die konische Innenfläche sich behälterseitig aufweitet, so dass die Dichtfläche 18 einen geringeren Durchmesser als die Entnahmefläche 16 aufweist. Innerhalb dieser konisch ausgebildeten Innenfläche ist zumindest ein Teil des Entnahmekolbens 2 angeordnet, der eine Entnahmekolbennut 5 aufweist, in der ein erstes Dichtelement 6 angeordnet ist. Dabei ist im geschlossenen Zustand des Entnahme- und Dosierventils 1 das erste Dichtelement 6 an der Dichtfläche 18 angeordnet, so dass die Durchlassöffnung 15 verschlossen ist.

Durch die Längsverschiebbarkeit des Entnahmekolbens 2 kann dieser in Richtung des Behälters 67 (siehe Fig. 18 und Fig. 20) verschoben werden, wodurch das Entnahme- und Dosierventil 1 geöffnet wird, wodurch die im Querschnitt ringförmig ausgebildete Durchlassöffnung 15 geöffnet wird. Zur einfacheren Anordnung des ersten Dichtelements 6 weist der Entnahmekolben 2 einen konusförmig ausgebildeten Entnahmekolbenendbereich 4 auf, wodurch das erste Dichtelement 6 leichter in der Entnahmekolbennut 5 anordenbar ist.

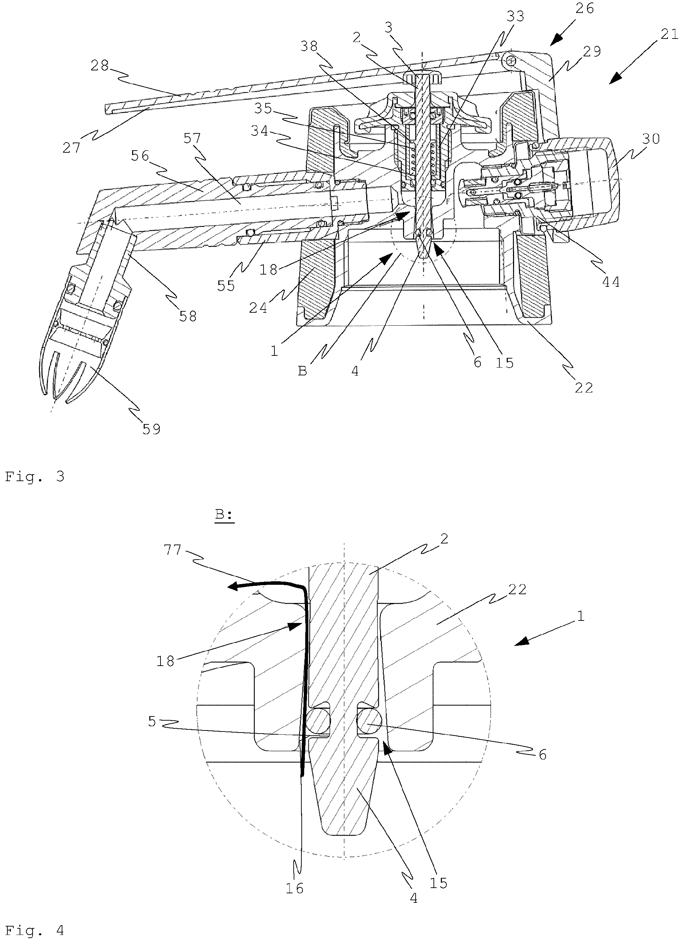

Fig. 3 zeigt eine Schnittdarstellung des Kopfes 21 mit dem erfindungsgemäßen Entnahme- und Dosierventil 1 in Dosierstellung. Im Detail ist ersichtlich, dass das vorzugsweise hebelartig ausgebildete Betätigungselement 27 leicht betätigt ist, sodass der Entnahmekolben 2 weiter in Richtung des Behälters 67 (siehe Fig. 18 und Fig. 20) angeordnet ist, wodurch das Entnahme- und Dosierventil 1 geöffnet ist, da das erste Dichtelement 6 nicht an der Dichtfläche 18 anliegt.

Fig. 4 zeigt eine vergrößerte Detaildarstellung B des Entnahme- und Dosierventils aus Fig. 3. Dabei ist deutlich ersichtlich, dass das Entnahme- und Dosierventil 1 geöffnet ist, da das erste Dichtelement 6 nicht an der Dichtfläche 18 anliegt, wodurch die ringförmig ausgebildete Durchlassöffnung 15 geöffnet ist. Hierdurch öffnet sich ein Strömungspfad 77 für die Entnahme eines Sprühmediums 76 aus dem Behälter 67 (siehe Fig. 18 und Fig. 20), wie durch einen Pfeil dargestellt ist. Im Detail ist durch die Kegel- oder Zylinderform des Entnahmekolbens 2 und die gegenläufige Konusform der Innenfläche 18, 16 des Entnahme- und Dosierventils 1 die Durchlassöffnung 15 ebenso konusförmig ausgebildet, wobei die Durchlassöffnung 15 im Bereich der Entnahmefläche 16 einen größeren Außendurchmesser als im Bereich der Dichtfläche 18 aufweist.

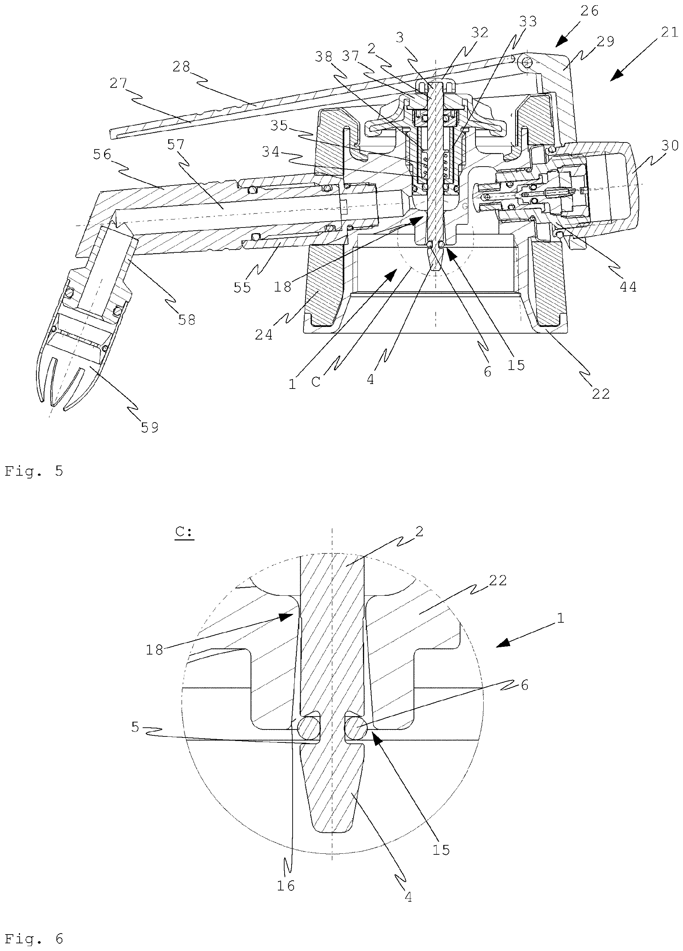

Fig. 5 zeigt eine Schnittdarstellung des Kopfes 21 mit dem erfindungsgemäßen Entnahme- und Dosierventil 1 in Drosselstellung. In dieser Stellung ist der Entnahmekolben 2 noch weiter in Richtung des Behälters 67 (siehe Fig. 18 und Fig. 20) angeordnet, was durch eine stärkere Betätigung des hebelartig ausgebildeten Betätigungselements 27 realisierbar ist. Mit anderen Worten ist das Betätigungselements 27 derart weit in Richtung des Behälters 67 gedrückt, dass das Gleitelement 32, welches am Entnahmekolbenbetätigungsbereich 3 angeordnet ist, auf dem Entnahmeeinheitsmantel 37 oder nahezu auf dem Entnahmeeinheitsmantel 37 anliegt.

Fig. 6 zeigt eine vergrößerte Detaildarstellung C des Entnahme- und Dosierventils aus Fig. 5. Dabei ist das Entnahme- und Dosierventil 1 geöffnet, da das erste Dichtelement 6 nicht an der Dichtfläche 18 anliegt, wodurch die ringförmig ausgebildete Durchlassöffnung 15 geöffnet ist. Es kann wiederum Sprühmedium 76 aus dem Behälter 67 austreten (siehe Fig. 18 und Fig. 20).

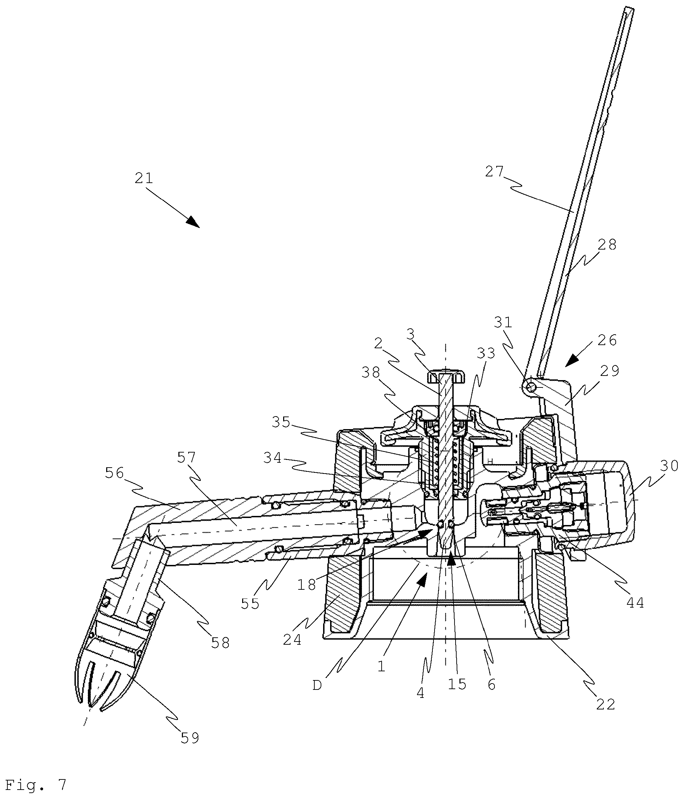

Fig. 7 zeigt eine Schnittdarstellung des Kopfes 21 mit dem erfindungsgemäßen Entnahme- und Dosierventil 1 in Entlüftungsstellung. Das bedeutet, dass das hebelartig ausgebildeten Betätigungselements 27 nicht auf dem Gleitelement 32 aufliegt, sondern über den Achsenstift 31 derart hochgeklappt ist, dass der Entnahmekolben 2 zur Reinigung des Entnahme- und Dosierventils 1 frei entnehmbar ist.

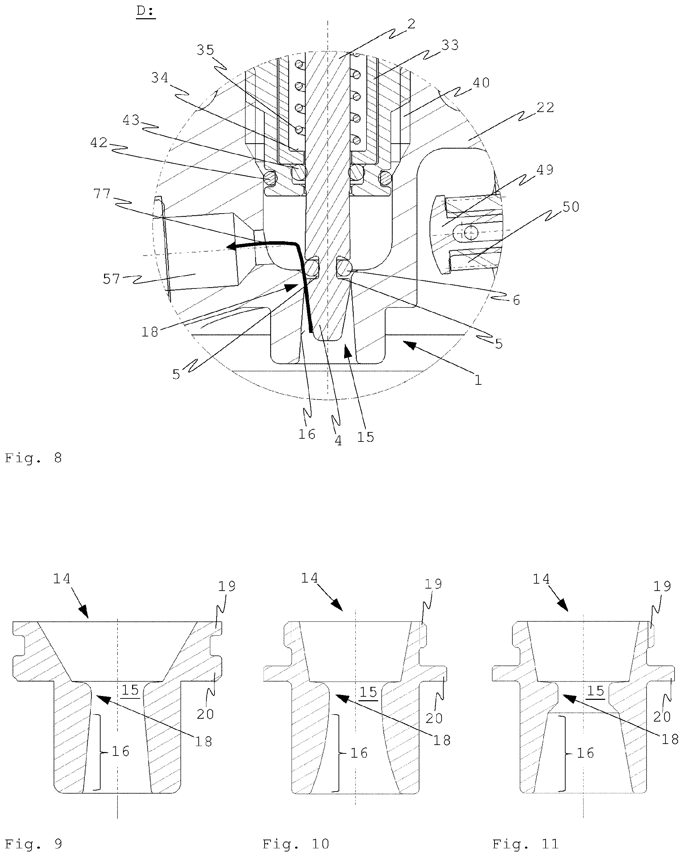

Fig. 8 zeigt eine vergrößerte Detaildarstellung D des Entnahme- und Dosierventils 1 aus Fig. 7, wobei hier auch ein Strömungspfad 77 mittels eines Pfeils dargestellt (siehe Fig. 18 und Fig. 20) ist. Im Detail ist der Entnahmekolben 2 in Richtung des Kopfes 21 angeordnet, sodass das Entnahme- und Dosierventil 1 geöffnet ist, da das erste Dichtelement 6 nicht an der Dichtfläche 18 anliegt.

Die Möglichkeit, dass in der Entlüftungsstellung Gas entweichen kann, dient der Realisierung einer Sicherheitsfunktion, die sicherstellt, dass eventuell noch im Behälter enthaltenes Gas bei bzw. während einem Lösen des Entnahmeeinheitskörpers 36 vom Kopfkörper 22 entweicht, sodass ein etwaiges durch einen Über- bzw. Restdruck hervorgerufenes schlagartiges Trennen des Entnahmeeinheitskörper 36 vom Kopfkörper 22 vermeidbar ist.

In einer alternativen Ausführungsform ist vorgesehen, dass das Entnahme- und Dosierventil 1 nicht als Teil des Kopfkörpers 22, sondern als eigene komplett austauschbare Komponente ausgebildet ist. Diesbezüglich zeigen Fig. 9, Fig. 10, Fig. 11, Fig. 12 und Fig. 14 jeweils eine Schnittdarstellung verschiedener Ausführungsformen einer Entnahmemündung 14, welche in den Kopfkörper 22 mittels eines Gewindeabschnitts 19 schraubbar ist, sodass verschiedenartig ausgebildete Formen von Entnahme- 16 und Dichtflächen 18 für beliebige Anwendungsfälle bzw. beliebig ausgebildete Formen von Durchlassöffnungen 15 realisierbar sind.

Hierzu wird die Entnahmemündung 14 bis zu einem Anschlag 20 in den Kopfkörper 22 geschraubt, wobei vorzugsweise zwischen dem Anschlag 20 und dem Gewindeabschnitt 19 ein Dichtelement (nicht dargestellt), vorzugsweise in Form eines O-Rings, angeordnet ist. Diesbezüglich ist in Fig. 9 eine konusförmige Innenfläche, in Fig. 10 eine konisch-konvexe Innenfläche (von der Durchlassöffnungen 15 betrachtet) und in Fig. 11 eine kegelstumpfförmige Innenfläche dargestellt, wobei in Fig. 11 die Dichtfläche 18 zylinderförmig ausgebildet ist.

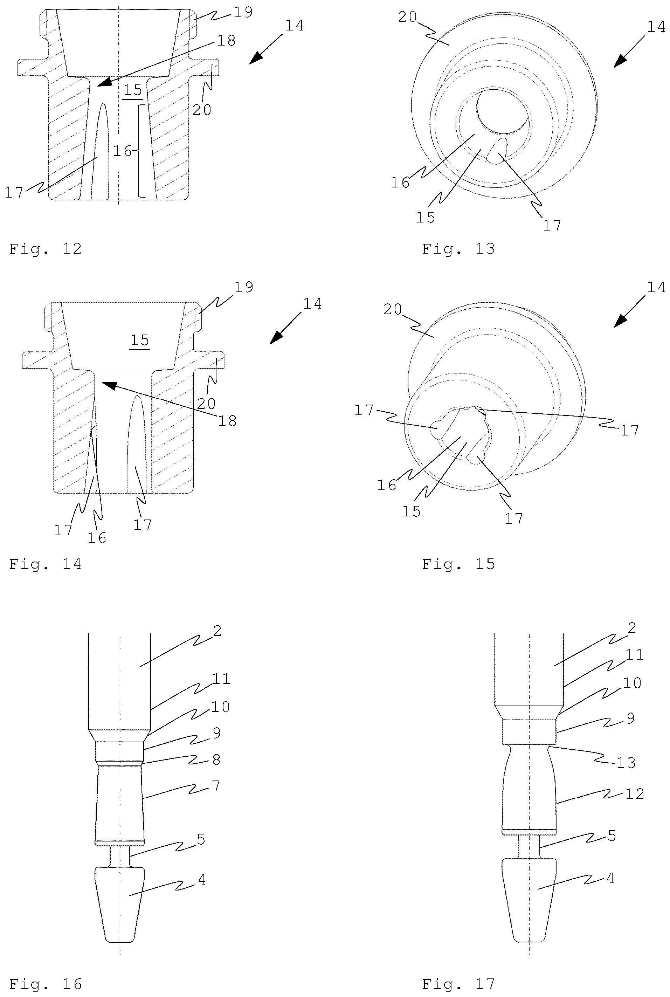

In Fig. 12 und Fig. 14 ist die Innenfläche jeweils konusförmig ausgebildet, wobei zusätzlich im Bereich der Entnahmefläche 16 zumindest eine, vorzugsweise schlitzförmige, Ausnehmung 17 angeordnet ist. Dabei weist die in Fig. 12 und Fig. 13 dargestellte Entnahmefläche 16 der Entnahmemündung 14 nur eine Ausnehmung 17 auf, während die in Fig. 14 und Fig. 15 dargestellte Entnahmemündung 14 drei symmetrisch, d.h. im Abstand von 120 Grad, angeordnete Ausnehmungen 17 aufweist. Mit derartigen Ausnehmungen ist eine zusätzliche Beeinflussung des Austrags bzw. der Form des Austrags des Sprühmediums 76 realisierbar.

Ausnehmungen entsprechend den Ausnehmungen 17 der Figuren 12-15 können auch im Ausführungsbeispiel der Figuren 1-8 im Bereich der Innenfläche 16 der Entnahmemündung 81 des Entnahme- und Dosierventils 1 vorgesehen sein.

Fig. 16 zeigt eine Seitenansicht einer weiteren Ausführungsform des erfindungsgemäßen Entnahmekolbens 2, wobei der Entnahmekolbenendbereich 4 gemäß obigen Erläuterungen konusförmig zur leichteren Anordnung des erstes Dichtelements 6, welches vorzugsweise in einer Entnahmekolbennut 5 angeordnet ist, ausgebildet ist. Um eine zusätzliche Steuerung des Volumenstroms des Sprühmediums 76 zu gewährleisten, ist der in Fig. 16 dargestellte Entnahmekolben 2 nicht rein zylinderförmig, sondern als stabförmiger Rotationskörper ausgebildet. Dabei weist der Entnahmekolben 2 angrenzend zur Entnahmekolbennut 5 einen sich konisch verjüngend ausgebildeten Dosierungsabschnitt 7 auf, wodurch eine stetige Steuerung des Volumenstroms des Sprühmediums 76 gewährleistet ist. Angrenzend zum Dosierungsabschnitt 7 weist der Entnahmekolben 2 einen stufenförmig ausgebildeten Flussbremsabschnitt 9, welcher zur Drosselung des Volumenstroms dient, auf, wobei dazwischen ein fasenförmig ausgebildeter erster Übergangsbereich 8 angeordnet ist. Im Anschluss an den Flussbremsabschnitt 9 folgt betätigungselementseitig ein zweiter fasenförmig ausgebildeter Übergangsbereich 10, welcher an einem Führungsabschnitt 11 des Entnahmekolbens 2 angrenzt.

Fig. 17 zeigt eine weitere Ausführungsform eines erfindungsgemäßen Entnahmekolbens 2, welcher den gleichen prinzipiellen Aufbau wie der in Fig. 16 dargestellte Entnahmekolben 2 aufweist, wobei jedoch der Entnahmekolben 2 einen gekrümmt ausgebildeten Dosierungsabschnitt 12 aufweist, wodurch eine unstetige Steuerung des Volumenstroms des Sprühmediums 76 gewährleistet ist.

Fig. 18 zeigt eine Schnittdarstellung einer Vorrichtung 66 zum Austragen von Sprühmedien 76 mit dem erfindungsgemäßen Entnahme- und Dosierventil 1, welches in dem Kopf 21 der Vorrichtung 66 angeordnet ist. Im Detail ist der Kopf 21 auf einen Behälter 67 mittels der erste Gewindeverbindung 23 aufgeschraubt, wobei darüber hinaus an dem Kopf 21 ein Steigrohr 69 über eine Steigrohrbefestigung 70, welche zur einfacheren Handhabung an beiden Enden des Steigrohrs 69 angeordnet ist, anordenbar ist. Hierzu weist der Kopf behälterseitig eine Steigrohrhalterung 71 auf, welche das Entnahme- und Dosierventil 1 umgibt, sodass gewährleistet ist, dass das auszutragende Sprühmedium 76 durch das Entnahme- und Dosierventil 1 strömt. Zusätzlich ist es denkbar, dass die Vorrichtung 66 eine Abtropfeinheit 78 mit Auffangschale 79 umfasst.

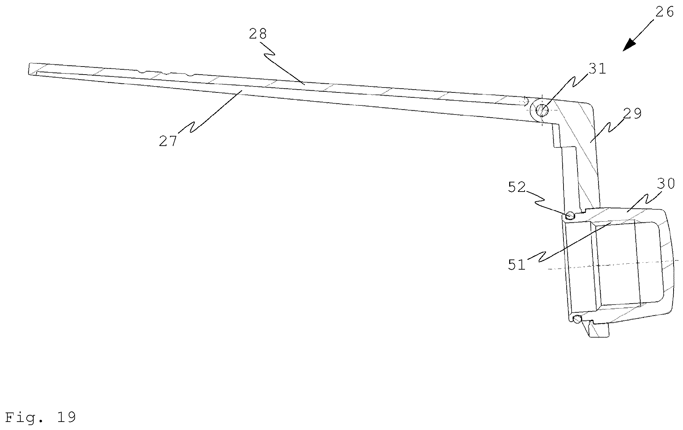

Fig. 19 zeigt eine Schnittdarstellung der von dem Kopf 21 abnehmbaren Betätigungseinheit 26 für die Vorrichtung 66 zum Austragen von Sprühmedien 76, wobei das vorzugsweise als Hebel ausgebildete Betätigungselement 27 über den Achsenstift 31 an der Halterung 29 angeordnet ist. Hierbei weist zur Gewährleistung eines besseren Griffverhalts das Betätigungselement 27 die Betätigungselementabdeckung 28 auf. Die Halterung 29 umfasst eine lochförmige Ausnehmung, durch welche die Halterung 29 mittels dem Befestigungselement 30 an dem Kopf 21 bzw. dem Kopfkörper 22 über die dritte Gewindeverbindung 51 anordenbar ist, wobei vorzugsweise ein ringförmig ausgebildetes Verbindungselement 52, welches das vorzugsweise kappenförmig ausgebildete Befestigungselement 30 öffnungsseitig umschließt. Hierbei ist das Verbindungselement 52 vorzugsweise als O-Ring ausgebildet, um eine zusätzliche Dichtheit zu gewährleisten.

Fig. 20 zeigt eine Schnittdarstellung der Vorrichtung 66 (ohne Betätigungseinheit 26) zum Austragen von Sprühmedien 76, wobei an der Vorrichtung eine Gaskapsel 72 zur Begasung der Vorrichtung bzw. des auszutragenden Sprühmediums 72 angeordnet ist. Im Detail ist zur Begasung des Sprühmediums 72 vorgesehen, dass in einem ersten Schritt die Betätigungseinheit 26 abgenommen und in einem nächsten Schritt die Gaskapsel 72 mittels eines Gaskapselhalters 73 an der Begasungseinheit 44 mittels einer vierten Gewindeverbindung 75 angeordnet wird. Zur Gewährleistung eines besseren Griffverhaltens weist der Gaskapselhalter 73 eine Gaskapselhalterabdeckung 74 auf. Nach erfolgter Begasung wird der Gaskapselhalter 73 samt Gaskapsel 72 abgeschraubt und die Betätigungseinheit 26 an dem Kopf 21 wieder angeordnet.

### BEZUGSZEICHENLISTE

- 1: Entnahme- und Dosierventil;
- 2: Entnahmekolben;
- 3: Entnahmekolbenbetätigungsbereich;
- 4: Entnahmekolbenendbereich;
- 5: Entnahmekolbennut;
- 6: erstes Dichtelement;
- 7: Dosierungsabschnitt (konisch) des Entnahmekolbens 2;
- 8: erster Übergangsbereich (Fase) des Entnahmekolbens 2;
- 9: Flussbremsabschnitt des Entnahmekolbens 2;
- 10: zweite Übergangsbereich (Fase) des Entnahmekolbens 2;
- 11: Führungsabschnitt des Entnahmekolbens 2;
- 12: Dosierungsabschnitt (gekrümmt) des Entnahmekolbens 2;
- 13: Übergangsbereich des Entnahmekolbens 2;
- 14: gesondert ausgebildete Entnahmemündung;
- 15: Durchlassöffnung;
- 16: Entnahmefläche;
- 17: Ausnehmung der Entnahmefläche 16;
- 18: Dichtfläche;
- 19: Gewindeabschnitt;
- 20: Anschlag;
- 21: Kopf;
- 22: Kopfkörper;
- 23: erste Gewindeverbindung: Kopf 21 - Behälter 67;
- 24: Kopfmantel;
- 25: Kopfmantelabdeckung;
- 26: Betätigungseinheit;
- 27: Betätigungselement;
- 28: Betätigungselementabdeckung;
- 29: Halterung des Betätigungselements 27;
- 30: Befestigungselement der Betätigungseinheit 26;
- 31: Achsenstift: Betätigungselement 27 - Halterung 29;
- 32: Gleitelement;
- 33: Niederhalter;
- 34: Federanschlag des Niederhalters 33;
- 35: Federelement;
- 36: Entnahmeeinheitskörper;
- 37: Entnahmeeinheitsmantel;
- 38: Entnahmekolbenanschlag;
- 39: Entnahmekolbenverschraubung;
- 40: zweite Gewindeverbindung: Kopfkörper 22 - Entnahmeeinheitskörper 36;
- 41: zweites Dichtelement;
- 42: drittes Dichtelement;
- 43: viertes Dichtelement;
- 44: Begasungseinheit;
- 45: Aufstechstifthalter;
- 46: Aufstechstift;
- 47: Prallplatte;
- 48: Haltering;
- 49: Rückschlagventilkolben;
- 50: Rückschlagventildichtung;
- 51: dritte Gewindeverbindung: Begasungseinheit 44 - Befestigungselement 30;
- 52: Verbindungselement: Befestigungselement 30 - Halterung 29;
- 53: fünftes Dichtelement;
- 54: sechstes Dichtelement;
- 55: Tüllenstutzen;
- 56: Tüllenhalterungsträger;
- 57: Mediumaustrittskanal;
- 58: Tüllenhalterung;
- 59: Tülle;
- 60: siebentes Dichtelement;
- 61: achtes Dichtelement;
- 62: neuntes Dichtelement;
- 63: zehntes Dichtelement;
- 64: elftes Dichtelement;
- 65: zwölftes Dichtelement;
- 66: Vorrichtung;
- 67: Behälter;
- 68: Rückschlagdichtung;
- 69: Steigrohr;
- 70: Steigrohrbefestigung;
- 71: Steigrohrhalterung;
- 72: Gaskapsel;
- 73: Gaskapselhalter;
- 74: Gaskapselhalterabdeckung;
- 75: vierte Gewindeverbindung: Begasungseinheit 44 - Gaskapselhalter 73;
- 76: Sprühmedium;
- 77: Strömungspfad des Sprühmediums 76;
- 78: Abtropfeinheit;
- 79: Auffangschale der Abtropfeinheit 78;
- 80: Längsachse des Entnahmekolbens 2;
- 81: in den Kopfkörper 22 integrierte Entnahmemündung.

## Patentansprüche

1. Entnahme- und Dosierventil (1) für eine Vorrichtung (66) zum Austragen von Sprühmedien (76), umfassend einen Entnahmekolben (2) mit einer Längsachse (80), welcher einen Entnahmekolbenbetätigungsbereich (3) sowie einen axial gegenüberliegend angeordneten Entnahmekolbenendbereich (4) aufweist, und eine Entnahmemündung (14, 81), welche eine Durchlassöffnung (15) aufweist, in welcher der Entnahmekolben (2) linear beweglich angeordnet ist, wobei das Entnahme- und Dosierventil (1) einen geschlossenen Zustand aufweist, der mit einer definierten Position des Entnahmekolbens (2) korrespondiert, wobei angrenzend zum Entnahmekolbenendbereich (4) betätigungsbereichsseitig ein erstes Dichtelement (6) angeordnet ist, welches im geschlossenen Zustand des Entnahme- und Dosierventils (1) die Durchlassöffnung (15) verschließt, wobei die Durchlassöffnung (15) radial außen durch eine betätigungselementseitige Dichtfläche (18) und eine sich axial daran anschließende austragsseitige Entnahmefläche (16) begrenzt ist, die zusammen eine Innenfläche der Entnahmemündung (40, 81) bilden, wobei das erste Dichtelement (6) im geschlossenen Zustand des Entnahme- und Dosierventils (1) zumindest teilweise an der Dichtfläche (18) anliegt, wobei die betätigungselementseitig angeordnete Dichtfläche (18) eine geringere Querschnittsfläche als die austragsseitig angeordnete Entnahmefläche (16) aufweist, **dadurch gekennzeichnet, dass** die Entnahmefläche (16) der Entnahmemündung (14) zumindest eine Ausnehmung (17) zur Durchflussregelung des Sprühmediums (76) umfasst.

2. Entnahme- und Dosierventil (1) nach Anspruch 1, **dadurch gekennzeichnet, dass** im geschlossenen Zustand des mittels eines am Entnahmekolbenbetätigungsbereich (3) angeordneten Betätigungselements (27) regelbaren Entnahme- und Dosierventils (1) zumindest ein Teil des Entnahmekolbenendbereichs (4) innerhalb der Durchlassöffnung (15) angeordnet ist.

3. Entnahme- und Dosierventil (1) nach einem der vorhergehenden Ansprüche, **dadurch gekennzeichnet, dass** sowohl die Dichtfläche (18) und die Entnahmefläche (16) der Entnahmemündung (14, 81) als auch der Entnahmekolben (2) die gleiche Querschnittsform aufweisen.

4. Entnahme- und Dosierventil (1) nach einem der vorhergehenden Ansprüche, **dadurch gekennzeichnet, dass** die Entnahmefläche (16) konisch, konisch bombiert oder konisch-konvex zur Regelung eines Durchflusses des Sprühmediums (76) zwischen Durchlassöffnung (15) und Entnahmekolben (2) ausgebildet ist.

5. Entnahme- und Dosierventil (1) nach einem der vorhergehenden Ansprüche, **dadurch gekennzeichnet, dass** der Entnahmekolbenendbereich (4) konusförmig ausgebildet ist.

6. Entnahme- und Dosierventil (1) nach einem der vorhergehenden Ansprüche, **dadurch gekennzeichnet, dass** das erste Dichtelement (6) in einer an den Entnahmekolbenendbereich (4) angrenzenden Entnahmekolbennut (5) angeordnet ist.

7. Entnahme- und Dosierventil (1) nach einem der vorhergehenden Ansprüche, **dadurch gekennzeichnet, dass** die mindestens eine Ausnehmung (17) flach oder schlitzförmig oder zylinderförmig ausgebildet ist.

8. Entnahme- und Dosierventil (1) nach einem der vorhergehenden Ansprüche, **dadurch gekennzeichnet, dass** der Entnahmekolben (2) einen entnahmekolbenbetätigungsbereichsseitig angeordneten Führungsabschnitt (11) umfasst, wobei zwischen dem Entnahmekolbenendbereich (4) und dem Führungsabschnitt (11) entnahmekolbenendbereichsseitig ein Dosierungsabschnitt (7, 12) und führungsabschnittsseitig ein Flussbremsabschnitt (9) angeordnet sind.

9. Entnahme- und Dosierventil (1) nach Anspruch 8, **dadurch gekennzeichnet, dass** der Dosierungsabschnitt konisch (7) oder gekrümmt (12) verjüngt zum Führungsabschnitt (11) ausgebildet ist.

10. Entnahme- und Dosierventil (1) nach Anspruch 8 oder 9, **dadurch gekennzeichnet, dass** der Führungsabschnitt (11) eine gleiche oder größere Querschnittsfläche als der Flussbremsabschnitt (9) aufweist, wobei der konisch oder gekrümmt ausgebildete Dosierungsabschnitt (7, 12) zumindest entnahmekolbenendbereichsseitig eine gleiche oder kleinere Querschnittsfläche als der Flussbremsabschnitt (9) aufweist.

11. Kopf (21) für eine Vorrichtung (66) zum Austragen von Sprühmedien (76) mit einem Entnahme- und Dosierventil (1) nach einem der Ansprüche 1 bis 10, umfassend:
∘ einen Kopfkörper (22),
∘ ein Betätigungselement (27), welches zur Handhabung des Entnahme- und Dosierventils (1) ausgebildet ist,
∘ einen Niederhalter (33), in dem ein Entnahmekolben (2) des Entnahme- und Dosierventils (1) linear beweglich angeordnet ist, wobei der Entnahmekolben (2) einen Entnahmekolbenanschlag (38) umfasst, welcher eine Schließstellung des Entnahme- und Dosierventils (1) begrenzt, wobei in dem Niederhalter (33) ein den Entnahmekolben (2) umgebendes Federelement (35), vorzugsweise in Form einer Druckfeder oder eines Gummipuffers, zwischen dem Entnahmekolbenanschlag (38) und einem Federanschlag (34) des Niederhalters (33) zur Fixierung der Schließstellung im unbetätigten Zustand des Entnahme- und Dosierventils (1) angeordnet ist;
∘ eine Begasungseinheit (44), durch welche eine Gasbefüllung aus einer Gaskapsel (72) des Kopfes (21) bzw. der Vorrichtung (66) gewährleistet ist, sowie
∘ einen Tüllenstutzen (55) zum Austragen des mit einem Gas aufgeschäumten Sprühmediums (76),
∘ wobei eine Entnahmemündung (81) des Entnahme- und Dosierventils (1) einstückig mit dem Kopfkörper (22) oder mittels eines betätigungselementseitig angeordneten Gewindeabschnitts (19) der Entnahmemündung (14) mit dem Kopfkörper (22) verschraubbar ausgebildet ist.

12. Vorrichtung (66) zum Austragen von Sprühmedien (76) mit einem Kopf (21) nach Anspruch 11, welcher ein Entnahme- und Dosierventil (1) nach einem der Ansprüche 1 bis 10, aufweist, umfassend:
∘ einen Behälter (67), an welchem ein Kopfkörper (22) des Kopfes (21) im bestimmungsgemäßen Gebrauch angeordnet ist, wobei zwischen dem Kopfkörper (22) und dem Behälter (67) eine Rückschlagdichtung (68) anordenbar ist;
∘ ein rohrförmig ausgebildetes Steigrohr (69), welches im Innenraum des Behälters (67) vorgesehen ist und an einer Steigrohrhalterung (71) des Kopfkörpers (22) mittels einer Steigrohrbefestigung (70) anordenbar ist,
∘ wobei das Steigrohr (69) über die Steigrohrhalterung (71) des Kopfkörpers (22) an das Entnahme- und Dosierventil (1) gekoppelt ist und
∘ wobei mittels der Begasungseinheit (44) ein Gasfluss aus der Gaskapsel (72), welche in einem Gaskapselhalter (73) anordenbar ist, in den Kopf (21) bzw. die Vorrichtung (66) gewährleistet ist.

## Claims

1. Extracting and dosing valve (1) for a device (66) for discharging spray media (76), comprising an extraction piston (2), having a longitudinal axis (80), that has an extraction-piston actuating region (3) and an axially oppositely arranged extraction-piston end region (4), and an extraction orifice (14, 81) having a passage opening (15) in which the extraction piston (2) is arranged so as to be movable linearly, the extracting and dosing valve (1) having a closed state that corresponds to a defined position of the extraction piston (2), there being arranged adjoining the extraction-piston end region (4), on the actuating region side, a first sealing element (6) that closes the passage opening (15) when the extracting and dosing valve (1) is in the closed state, the passage opening (15) being delimited radially outwardly by a sealing surface (18) on the actuating element side and by an extraction surface (16) axially adjoining it on the discharge side, which together form an inner surface of the extraction orifice (40, 81), the first sealing element (6) bearing at least partially against the sealing surface (18) when the extracting and dosing valve (1) is in the closed state, the sealing surface (18) arranged on the actuating element side having a lesser cross-sectional area than the extraction surface (16) arranged on the discharge side, **characterized in that**, for regulation of the flow of the spray medium (76), the extraction surface (16) of the extraction orifice (14) comprises at least one recess (17).

2. Extracting and dosing valve (1) according to Claim 1, **characterized in that** when the extracting and dosing valve (1), which can be regulated by means of an actuating element (27) arranged on the extraction-piston actuating region (3), is in the closed state, at least part of the extraction-piston end region (4) is located within the passage opening (15).

3. Extracting and dosing valve (1) according to either of the preceding claims, **characterized in that** both the sealing surface (18) and the extraction surface (16) of the extraction orifice (14, 81), as well as the extraction piston (2), have the same cross-sectional shape.

4. Extracting and dosing valve (1) according to any one of the preceding claims, **characterized in that** the extraction surface (16) is conical, conically domed or conically convex for the purpose of regulating a flow of the spray medium (76) between the passage opening (15) and the extraction piston (2).

5. Extracting and dosing valve (1) according to any one of the preceding claims, **characterized in that** the extraction-piston end region (4) is conical.

6. Extracting and dosing valve (1) according to any one of the preceding claims, **characterized in that** the first sealing element (6) is arranged in an extraction-piston groove (5) that adjoins the extraction-piston end region (4).

7. Extracting and dosing valve (1) according to any one of the preceding claims, **characterized in that** the at least one recess (17) is flat or slot-shaped or cylindrical.

8. Extracting and dosing valve (1) according to any one of the preceding claims, **characterized in that** the extraction piston (2) comprises a guide portion (11) arranged on the extraction-piston actuating-region side, there being arranged, between the extraction-piston end region (4) and the guide portion (11), a dosing portion (7, 12) on the extraction-piston end-region side and a flow braking portion (9) on the guide-portion side.

9. Extracting and dosing valve (1) according to Claim 8, **characterized in that** the dosing portion is tapered conically (7) or in a curved manner (12) towards the guide portion (11).

10. Extracting and dosing valve (1) according to Claim 8 or 9, **characterized in that** the guide portion (11) has a cross-sectional area that is equal to or greater than that of the flow braking portion (9), the conical or curved dosing portion (7, 12) having, at least on the extraction-piston end-region side, a cross-sectional area that is equal to or less than that of the flow braking portion (9).

11. Head (21) for a device (66) for discharging spray media (76), comprising an extracting and dosing valve (1) according to any one of Claims 1 to 10, comprising:
∘ a head body (22),
∘ an actuating element (27), designed for handling the extracting and dosing valve (1),
∘ a hold-down device (33) in which an extraction piston (2) of the extracting and dosing valve (1) is arranged so as to be linearly movable, the extraction piston (2) comprising an extraction-piston stop (38) that delimits a closed position of the extracting and dosing valve (1), a spring element (35), preferably in the form of a compression spring or a rubber buffer, surrounding the extraction piston (2) being arranged in the hold-down device (33), between the extraction-piston stop (38) and a spring stop (34) of the hold-down device (33), for fixing the closed position when the extracting and dosing valve (1) is in the non-actuated state;
o a gas supply unit (44), by means of which gas filling from a gas capsule (72) of the head (21), or of the device (66), is effected, as well as
∘ a spout nozzle (55) for discharging the spray medium (76) foamed with a gas,
∘ an extraction orifice (81) of the extracting and dosing valve (1) being integral with the head body (22) or such that it can be screw-connected to the head body (22) by means of a threaded portion (19) of the extraction orifice (14) arranged on the actuating element side.

12. Device (66) for discharging spray media (76), comprising a head (21) according to Claim 11 that has an extraction and dosing valve (1) according to any one of Claims 1 to 10, comprising:
∘ a container (67) on which a head body (22) of the head (21) is arranged when use is as intended, a non-return seal (68) being arrangeable between the head body (22) and the container (67);
∘ a tubular riser pipe (69) that is provided in the interior of the container (67) and is arrangeable on a riser-pipe mount (71) of the head body (22) by means of a riser-pipe fastening (70),
∘ the riser pipe (69) being coupled to the extracting and dosing valve (1) via the riser-pipe mount (71) of the head body (22), and
∘ a gas flow being effected from the gas capsule (72), which can be arranged in a gas-capsule holder (73), into the head (21), or into the device (66), by means of the gas supply unit (44).

## Revendications

1. Soupape de prélèvement et de dosage (1) pour un dispositif (66) de distribution de milieux de pulvérisation (76), comprenant un piston de prélèvement (2) ayant un axe longitudinal (80), qui présente une région d'actionnement de piston de prélèvement (3) et une région d'extrémité de piston de prélèvement (15) axialement opposée, et un orifice de prélèvement (14, 81), lequel présente une ouverture de passage (4), dans laquelle le piston de prélèvement (2) est disposé de manière linéairement mobile, la soupape de prélèvement et de dosage (1) présentant un état fermé, qui correspond à une position définie du piston de prélèvement (2), un premier élément d'étanchéité (6) étant disposé de façon adjacente à la région d'extrémité de piston de prélèvement (4) du côté de la région d'actionnement, lequel premier élément d'étanchéité, à l'état fermé de la soupape de prélèvement et de dosage (1), ferme l'ouverture de passage (15), l'ouverture de passage (15) étant limitée radialement vers l'extérieur par une surface d'étanchéité (18) du côté de l'élément d'actionnement et une surface de prélèvement (16) s'y raccordant axialement côté distribution, lesquelles surfaces forment ensemble une surface intérieure de l'orifice de prélèvement (40, 81), le premier élément d'étanchéité (6), à l'état fermé de la soupape de prélèvement et de dosage (1), étant au moins partiellement en appui sur la surface d'étanchéité (18), la surface d'étanchéité (18) disposée du côté de l'élément d'actionnement présentant une surface de section transversale plus petite que la surface de prélèvement (16) disposée côté distribution, **caractérisée en ce que** la surface de prélèvement (16) de l'orifice de prélèvement (14) comporte au moins un évidement (17) pour la régulation du débit du milieu de pulvérisation (76).

2. Soupape de prélèvement et de dosage (1) selon la revendication 1, **caractérisée en ce qu'**à l'état fermé de la soupape de prélèvement et de dosage (1) réglable au moyen d'un élément d'actionnement (27) disposé au niveau de la région d'actionnement de piston de prélèvement (3), au moins une partie de la région d'extrémité de piston de prélèvement (4) est disposée à l'intérieur de l'ouverture de passage (15).

3. Soupape de prélèvement et de dosage (1) selon l'une quelconque des revendications précédentes, **caractérisée en ce que** la surface d'étanchéité (18) et la surface de prélèvement (16) de l'orifice de prélèvement (14, 81) ainsi que le piston de prélèvement (2) présentent la même forme en section transversale.

4. Soupape de prélèvement et de dosage (1) selon l'une quelconque des revendications précédentes, **caractérisée en ce que** la surface de prélèvement (16) est réalisée de façon conique, bombée de façon conique ou conique-convexe pour la régulation d'un débit du milieu de pulvérisation (76) entre l'ouverture de passage (15) et le piston de prélèvement (2).

5. Soupape de prélèvement et de dosage (1) selon l'une quelconque des revendications précédentes, **caractérisée en ce que** la région d'extrémité de piston de prélèvement (4) est réalisée sous forme conique.

6. Soupape de prélèvement et de dosage (1) selon l'une quelconque des revendications précédentes, **caractérisée en ce que** le premier élément d'étanchéité (6) est disposé dans une rainure de piston de prélèvement (5) adjacente à la région d'extrémité de piston de prélèvement (4).

7. Soupape de prélèvement et de dosage (1) selon l'une quelconque des revendications précédentes, **caractérisée en ce que** l'au moins un évidement (17) est plat ou en forme de fente ou cylindrique.

8. Soupape de prélèvement et de dosage (1) selon l'une quelconque des revendications précédentes, **caractérisée en ce que** le piston de prélèvement (2) comporte une section de guidage (11) disposée du côté de la région d'actionnement de piston de prélèvement, dans laquelle, entre la région d'extrémité de piston de prélèvement (4) et la section de guidage (11), une section de dosage (7, 12) est disposée du côté de la région d'extrémité de piston de prélèvement et une section de freinage de flux (9) est disposée du côté de la section de guidage.

9. Soupape de prélèvement et de dosage (1) selon la revendication 8, **caractérisée en ce que** la section de dosage est réalisée de façon conique (7) ou courbe (12) en se rétrécissant vers la section de guidage (11).

10. Soupape de prélèvement et de dosage (1) selon la revendication 8 ou 9, **caractérisée en ce que** la section de guidage (11) présente une surface de section transversale supérieure ou égale à celle de la section de freinage de flux (9), la section de dosage (7, 12) réalisée de façon conique ou courbe présentant une surface de section transversale inférieure ou égale à celle de la section de freinage de flux (9) au moins du côté de la région d'extrémité de piston de prélèvement.

11. Tête (21) pour un dispositif (66) de distribution de milieux de pulvérisation (76) comportant une soupape de prélèvement et de dosage (1) selon l'une quelconque des revendications 1 à 10, comprenant :
∘ un corps de tête (22),
∘un élément d'actionnement (27), lequel est réalisé pour manipuler la soupape de prélèvement et de dosage (1),
∘ un dispositif de retenue (33) dans lequel un piston de prélèvement (2) de la soupape de prélèvement et de dosage (1) est disposé de manière linéairement mobile, dans laquelle le piston de prélèvement (2) comprend une butée de piston de prélèvement (38), laquelle limite une position de fermeture de la soupape de prélèvement et de dosage (1), dans laquelle, dans le dispositif de retenue (33), un élément ressort (35) entourant le piston de prélèvement (2), de préférence sous la forme d'un ressort de compression ou d'un tampon en caoutchouc, est disposé entre la butée de piston de prélèvement (38) et une butée de ressort (34) du dispositif de retenue (33) pour fixer la position de fermeture lorsque la soupape de prélèvement et de dosage (1) est dans l'état non actionné ;
∘ une unité d'introduction de gaz (44), par laquelle est assuré un remplissage de gaz à partir d'une capsule de gaz (72) de la tête (21) ou du dispositif (66), et
∘ une tubulure formant gaine (55) pour distribuer le milieu de pulvérisation (76) moussé avec un gaz,
∘ dans laquelle un orifice de prélèvement (81) de la soupape de prélèvement et de dosage (1) est formé d'une seule pièce avec le corps de tête (22) ou est réalisé de façon à pouvoir être vissé sur le corps de tête (22) au moyen d'une section filetée (19), disposée du côté de l'élément d'actionnement, de l'orifice de prélèvement (14).

12. Dispositif (66) de distribution de milieux de pulvérisation (76) comportant une tête (21) selon la revendication 11, laquelle présente une soupape de prélèvement et de dosage (1) selon l'une quelconque des revendications 1 à 10, comprenant :
∘ un récipient (67) sur lequel un corps de tête (22) de la tête (21) est disposé lors de l'utilisation prévue, dans lequel un joint d'étanchéité anti-retour (68) peut être disposé entre le corps de tête (22) et le récipient (67) ;
∘ un tuyau ascendant (69) réalisé de façon tubulaire, lequel est prévu dans l'espace intérieur du récipient (67) et peut être disposé sur un support de tuyau ascendant (71) du corps de tête (22) au moyen d'une fixation de tuyau ascendant (70),
∘ dans lequel le tuyau ascendant (69) est accouplé à la soupape de prélèvement et de dosage (1) par l'intermédiaire du support de tuyau ascendant (71) du corps de tête (22) et
∘ dans lequel un flux de gaz provenant de la capsule de gaz (72), laquelle peut être disposée dans un support de capsule de gaz (73), est assuré dans la tête (21) ou le dispositif (66) au moyen de l'unité d'introduction de gaz (44).
